**Europäisches Patentamt**

**European Patent Office**

**Office européen des brevets**

(11) Veröffentlichungsnummer: **0 257 217**
A1

(12) ## EUROPÄISCHE PATENTANMELDUNG

(21) Anmeldenummer: 87108657.5

(51) Int. Cl.⁴: **B 23 D 47/04**

(22) Anmeldetag: **16.06.87**

(30) Priorität: **02.08.86 DE 3626233**

(43) Veröffentlichungstag der Anmeldung: **02.03.88**
Patentblatt 88/9

(84) Benannte Vertragsstaaten: **AT CH ES FR GB IT LI SE**

(71) Anmelder: **Bültmann, Rudolf, Küntroper Strasse 194,
D-5982 Neuenrade 2 (DE)**

(72) Erfinder: **Bültmann, Rudolf, Küntroper Strasse 194,
D-5982 Neuenrade 2 (DE)**

(74) Vertreter: **Fritz, Herbert, Dipl.-Ing., Mühlenberg 74,
D-5760 Arnsberg 1 (DE)**

(54) **Vorrichtung zum Zersägen von langgestrecktem Sägegut.**

(57) Eine Tischplatte (10) nimmt beim Sägen die Rohre (1a) auf. Diese werden beim Sägen durch einen Gummiblock (18) gehalten. Das Sägen erfolgt durch ein Kreissägeblatt (12), das von unten her aus einem Gehäuse durch einen Schlitz (13) hochfährt. Die Tischplatte ist insgesamt oder zum Teil nach einer Seite hin abkippbar, damit Reststücke nach dem Sägen in einen seitlich aufgestellten Behälter (23) abgeworfen werden können.

0 0257217

B e s c h r e i b u n g :

=================================================

"Vorrichtung zum Zersägen von langgestrecktem
 Sägegut"

=================================================

Die Erfindung bezieht sich auf eine Vorrichtung
zum Zersägen von langgestrecktem Sägegut, wie zum
Beispiel Rohre und Stangen, mit den Markmalen des
Oberbegriffs des Hauptanspruches.

Mit einer Vorrichtung dieser Art besteht die
Möglichkeit, mehrere Rohre oder Stangen beliebigen
Querschnitts in einem Arbeitsgang auf eine bebestimmte Länge zu sägen, denn die Gesamtheit des
Sägegutes wird während des Sägevorgangs durch einen
Gummiblock festgehalten, der das Gut auf eine
Tischplatte drückt. Der Gummiblock gewährleistet
gleichzeitig Unfallschutz und Geräuschdämpfung.

Bei einer bekannten Vorrichtung dieser Art
(DE-OS 33 17 987) erfolgt die Weiterbeförderung
des gesägten Gutes durch Schwenkarme, jedoch nur
insoweit, als das Gut wesentlich über die
Tischplatte hinausragt.

Die Aufgabe der vorliegenden Erfindung ist darin
zu sehen, eine Vorrichtung der in Frage stehenden
Art so auszubilden, daß auch kurze gesägte Stücke

00257217
87/o57

nach dem Sägevorgang automatisch weiterbefördert
werden können.

Eine Vorrichtung mit den Merkmalen des Hauptanspruches
stellt eine Lösung der vorgenannten Aufgabe dar.
Die Unteransprüche haben bevorzugte Ausführungsformen
zum Inhalt.

Bei einer Vorrichtung nach der Erfindung ist
zumindest der eingangsseitige Teil der Tischplatte
derart nach unten kippbar ausgestaltet, daß nach
dem Sägen die liegengebliebenen Endstücke der auf
Länge gesägten Rohre automatisch in einen
bereitstehenden Behälter weiterbefördert werden
können. Die Tischplatte selbst ist somit als
Fördermittel genutzt. Der Behälter kann an den
Querseiten oder eingangsseitig aufgestellt werden
je nach den örtlichen Verhältnissen. Entsprechend
ist die Kippachse anzuordnen. Nach einer bevorzugten
Ausführungsform der Erfindung sind zwei
Tischplattenhälften einer entlang des Schlitzes,
wo das Sägeblatt hindurchgeht, geteilten Tischplatte
nach verschiedenen Richtungen kippbar, was die
Möglichkeit eröffnet, beide Hälften relativ kurzer
Rohre, die nicht wesentlich über die Tischplatte
hinausragen, nach dem Sägen in bereitgestellte
Behälter weiterzubefördern.

Vor dem Sägen werden die Rohre in Längsrichtung
oder in Querrichtung harangebracht. Für die richtige
Lage sind Anschläge vorgesehen. Bei sehr kurzen
Rohren kann ein Anschlag auch im Bereich der
Tischplatte, sogar im Bereich des Gummiblockes
vorgesehen sein. Wenn lange Rohre in Längsrichtung vor dem Sägen herangebracht werden, die weit über die Tischplatte hinausgehen, dann ist es zweckmäßig, gemäß der weiteren Erfindung die Tischplatte etwas abzusenken, damit die Rohre beim Längstransport von der Tischplatte frei sind und ihre Oberfläche nicht beschädigt wird.

Im folgenden wird ein Ausführungsbeispiel der Erfindung näher beschrieben unter Bezugnahme auf die beiliegenden Zeichnungen.

Fig. 1     stellt eine Ansicht einer Vorrichtung nach der Erfindung dar in Längsrichtung gesehen;

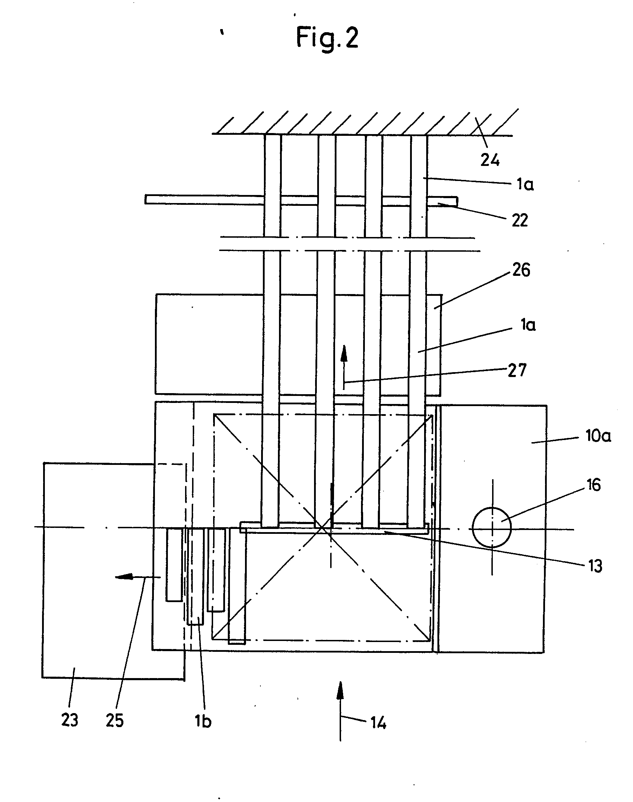

Fig. 2     ist eine entsprechende Draufsicht.

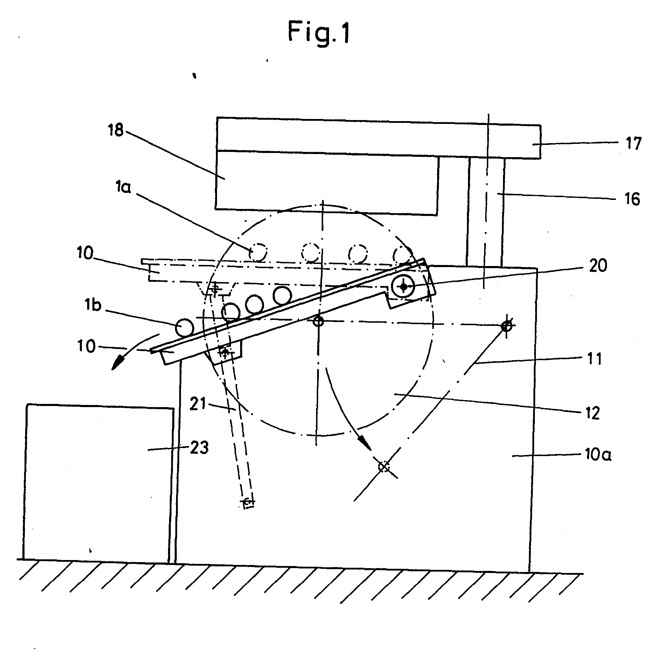

Auf einem Gehäuse 1oa ist zur Aufnahme des Sägegutes eine Tischplatte 1o vorgesehen, die zum Sägen horizontal einstellbar ist und die auch um eine Achse 2o nach einer Querseite kippbar ist, um Reststücke des Sägegutes nach einer Querseite in einen Behälter 23 abzuwerfen. Zur Ausführung der Schwenkung der Tischplatte 1o ist ein Zylinderkolben 21 vorgesehen. In Fig. 1 ist die geneigte Stellung, bei welcher der Abwurf stattfindet, voll ausgezeichnet, während die horizontale Stellung beim Sägen gestrichelt gezeichnet ist.

Zum Sägen ist ein Kreissägeblatt 12 vorgesehen, daß vom Gehäuse aufgenommen ist und an einem Schwenkarm 11 gelagert ist. Mittels des Schwenkarmes kann das Kreissägeblatt so eingestellt werden, daß es vollständig vom Gehäuse aufgenommen ist oder daß es durch einen Schlitz 13 hindurch zum Teil oberhalb der Tischplatte gefahren ist, wenn gesägt wird.

Nach dem Ausführungsbeispiel sind vier Rohre 1a auf eine bestimmte Länge zugeschnitten. Die abgesägten Endstücke 1b sind dabei über die geneigte Tischplatte nach links in einen Behälter 23 zu fallen. Die auf Länge gesägten Rohre 1a werden, soweit sie über die Tischplatte hinausgehen, in der horizontalen Stellung durch Arme 22 gehalten. Diese Arme sind auch in der Lage, durch eine Schwenkbewegung die auf Länge gesägten Rohre zur Seite hin in eine Mulde zu befördern.

Vor dem Sägen werden die Rohre an der Eingangsseite 14 in Längsrichtung durch nicht dargestellte Förderrollen herangebracht, bis ihre vorderen Enden einen Anschlag 24 erreichen. Dann werden die Rohre im Bereich der Tischplatte 1o von oben durch einen Gummiblock 18 gehalten, der an einem Arm 17 angebracht ist und mittels eines Hubkolbens 16 auf- und abgefahren werden kann. Beim Sägen wird der überstehende Teil des Kreissägeblattes vollständig vom Gummiblock aufgenommen, wodurch die Geräuschentwicklung beim Sägen gedämpft wird und die Sägespäne festgehalten werden.

Nach einer weiteren Ausführungsform der Erfindung ist vorgesehen, die Tischplatte 1o entlang des Schlitzes 13 zu teilen in eine Hälfte am Eingang und eine Hälfte am Ausgang der Sägevorrichtung, wobei beide Plattenhälften abkippbar ausgeführt werden können. Dies bietet die Möglichkeit, beim Sägen relativ kurzer Rohre, die nicht wesentlich über die Tischplatte hinausragen, die jeweils eingangsseitigen und auch die ausgangsseitigen Rohrstücke durch Abkippen nach dem Sägen weiter zu befördern. So können beispielsweise die eingangsseitigen Rohrstücke der Querseite hin in der Richtung 25 in den Behälter 23 geworfen werden, während die ausgangseitigen Rohrstücke in der Kipprichtung 27 längs in den dort aufgestellten Behälter 26 gebracht werden können.

Patentansprüche:

1. Vorrichtung zum Zersägen von langgestrecktem Sägegut (Rohre, Stangen) mit den Merkmalen:

   - unter einer Tischplatte auf der das Sägegut liegt, ist ein Kreissägeblatt durch einen Schlitz hochschwenkbar gelagert;

   - durch einen Gummiblock wird das Gut beim Sägen im Bereich des Schlitzes elastisch gegen die Tischplatte gepreßt;

   - der Gummiblock ist hochfahrbar und zur Seite schwenkbar;

   gekennzeichnet durch die nachfolgenden Merkmale:

   - zumindest der eingangsseitige Teil der Tischplatte ist zwecks Abwurf kurzer Reststücke nach einer Seite hin kippbar gelagert.

2. Vorrichtung nach Anspruch 1, dadurch gekennzeichnet, daß auch der ausgangsseitige Teil der Tischplatte nach einer Seite hin kippbar gelagert ist.

3. Vorrichtung nach Anspruch 1, dadurch gekennzeichnet, daß die Tischplatte insgesamt bei der Heranführung des Sägegutes etwas absenkbar ist.

00257217
87/057

Neue Patentansprüche:

1. Vorrichtung zum Zersägen von langgestrecktem Sägegut
   (Rohre, Stangen) mit den Merkmalen:

   - unter einer Tischplatte, auf der das Sägegut liegt,
     ist ein Kreissägeblatt durch einen Schlitz
     hochschwenkbar gelagert;

   - durch einen Gummiblock wird das Gut beim Sägen im
     Bereich des Schlitzes elastisch gegen die Tischplatte
     gepreßt;

   - der Gummiblock ist hochfahrbar und zur Seite
     schwenkbar;

   gekennzeichnet durch die nachfolgenden Merkmale:

   - die Tischplatte (1o) ist entlang des Schlitzes (13)
     geteilt, wobei die eine Plattenhälfte in Querrichtung,
     die andere in Längsrichtung kippbar ist.

2. Vorrichtung nach Anspruch 1, dadurch gekennzeichnet,
   daß die Tischplatte insgesamt bei der Heranführung
   des Sägegutes etwas absenkbar ist.

# Fig.1

Fig. 2

00257217

00257217
Nummer der Anmeldung

**Europäisches Patentamt**

**EUROPÄISCHER RECHERCHENBERICHT**

| EINSCHLÄGIGE DOKUMENTE | | | EP 87108657.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | AT - B - 357 331 (GIBEN IMPIANTI S.P.A.)<br>* Gesamt *<br>-- | 1,2 | B 23 D 47/04 |
| A | DE - A - 2 116 687 (FA. BLITZ-TRENNER)<br>* Anspruch 1 *<br>-- | 3 | |
| A | DE - A1 - 3 101 662 (BEHRENDT)<br>* Anspruch 1; Fig. 3 *<br>-- | 1,2 | |
| A | DE - A1 - 2 708 217 (ALCAN RE-SEARCH)<br>* Anspruch 1; Fig. 2,3 *<br>-- | 1,2 | |
| A | DE - A - 1 809 997 (PAHLITZSCH)<br>* Ansprüche 3,4; Fig. 3,4 *<br>-- | 1,2 | RECHERCHIERTE SACHGEBIETE (Int. Cl.4)<br><br>B 23 D 21/00 |
| A | DE - A1 - 3 529 149 (G. WAGNER)<br>---- | | B 23 D 45/00<br>B 23 D 47/00<br>B 26 D 3/00<br>B 27 B 5/00 |

Der vorliegende Recherchenbericht wurde für alle Patentansprüche erstellt.

| Recherchenort | Abschlußdatum der Recherche | Prüfer |
|---|---|---|
| WIEN | 19-10-1987 | NIMMERRICHTER |